# EUROPEAN PATENT APPLICATION

(11) **EP 4 585 801 A1**
(43) Date of publication of application: **16.07.2025**
(21) Application number: 24151537.8
(22) Date of filing: 12.01.2024
(51) Int. Cl.: F03D 7/02, F03D 7/04

(54) **CONTROLLING WIND TURBINES IN CASE OF A UTILITY GRID EVENT**

(71) Applicant: Siemens Gamesa Renewable Energy A/S, 7330 Brande (DK)
(72) Inventor: Kleif, Bjarke, 7100 Vejle (DK); Stoettrup, Michael, 7400 Herning (DK)
(74) Representative: SGRE-Association

(57) **Abstract**

It is described a method of controlling plural wind turbines (2a,2b) being connected to a utility grid (3), comprising respective wind turbine controllers (5a,5b) and being communicatively connected with a plant controller (4), the method comprising for at least one wind turbine: determining, by the plant controller (4), in response to a utility grid event, a reference (6a, 6b) of an operation parameter (P, Q); communicating, from the plant controller (4) to the wind turbine controller (5a, 5b), the plant controller determined reference (6a,6b) of the operation parameter; communicating, from the plant controller (4) to the wind turbine controller (5a,5b), an annotation information (7a,7b) indicating that the reference of the operation parameter has been determined based on the grid event; then controlling, by the wind turbine controller (5a,5b), the wind turbine (2a,2b) based on the plant controller determined reference (6a,6b) of the operation parameter.

## Description

### Field of invention

The present invention relates to a method of controlling plural wind turbines in case of a utility grid event. Furthermore, the method relates to a wind plant being adapted to carry out or control the control method.

### Art Background

Plural wind turbines forming a wind park may conventionally be connected to a utility grid. The utility grid may be configured to operate at a particular nominal electrical characteristics, such as nominal voltage and/or nominal frequency. In case, the nominal electrical parameters are not achieved, for example in case of a low or high frequency event or low or high voltage event, measures are to be taken in order to re-establish normal operation, i.e., operating the utility grid with nominal electrical characteristics.

It has been observed, that the speed of response to a utility grid event is not under all circumstances and situations provided as fast as desirable in order to re-establish normal operation in a fast and secure and reliable manner.

Thus, there may be a need for a method of controlling plural wind turbines which are being connected to a utility grid and there may also be a need for a wind park, wherein in case of a utility grid event, an appropriate response can be provided in a fast and/or reliable and/or secure manner, in order to re-establish normal operation of the utility grid.

### Summary of the Invention

This need may be met by the subject matter according to the independent claims. Advantageous embodiments of the present invention are described by the dependent claims.

According to an embodiment of the present invention it is provided a method of controlling plural wind turbines being connected to a utility grid, comprising respective wind turbine controllers and being communicatively connected with a plant controller, the method comprising for at least one wind turbine: determining, by the plant controller, in response to a utility grid event, a reference of an (e.g. grid event relevant) operation parameter; communicating, from the plant controller to the wind turbine controller, the plant controller determined reference of the operation parameter; communicating, from the plant controller to the wind turbine controller, an annotation information indicating that the reference of the operation parameter has been determined based on the grid event (e.g. for proper response to the grid event); then controlling, by the wind turbine controller, the wind turbine based on the plant controller determined reference of the operation parameter.

The method may be implemented in hardware and/or software. The method may be performed by the central plant controller and at least one wind turbine controller of at least one wind turbine. In particular, all wind turbines of the wind park may comprise respective wind turbine controllers and the method may be performed by the plant controller as well as all wind turbine controllers.

The wind turbines may each comprise an electrical generator which may be coupled to a main shaft to which for each wind turbine, plural rotor blades are conducted. Each wind turbine may further comprise a converter, in particular AC/DC converter portion, comprising a DC link and a DC/AC converter portion. The wind turbines may also further each comprise a transformer.

Output power of the wind turbines may be transmitted to a point of common coupling which may then via one or more optional wind park transformers be connected to the AC utility grid. The AC utility grid may for example be a three-phase AC utility grid which may be designed to operate at nominal voltage and/or nominal frequency or in general may be designed to operate at a designed electrical characteristics including voltage and/or frequency.

Any deviation (or deviation above a threshold) of an actual electrical characteristics from the nominal electrical characteristics may be associated with a utility grid event. A utility grid event may for example be present, if a deviation of an actual voltage (actual frequency) of the utility grid deviates by more than a threshold from a nominal voltage (or nominal frequency).

Due to grid codes or legal requirements, the wind park including the wind turbines may be required to in a fast manner respond to any detected grid event. Therefore, at the wind plant level (or plant controller level) and/or at the wind turbine level (or wind turbine controller level), respective measurement equipment may be provided which is capable for measuring electrical properties at respective output terminals or utility grid connection terminals. For example, the plant controller may receive measurement results of voltage and/or frequency at a wind park utility connection terminal or point of common coupling at which the wind turbines are connected to each other (or for example a low voltage site of a wind park transformer or a high voltage site of a wind park transformer). In other embodiments, the plant controller may receive information regarding the electrical state of the utility grid from a third party or may only receive information regarding any frequency or voltage event from a third party.

Depending on the kind and/or the severity of the grid event, the plant controller may determine by any algorithmic, in particular including reference curves and/or droop curves, a reference of a (grid event relevant) operation parameter, in order to respond to the grid event. The plant controller may for example select for a voltage grid event a reference of a reactive power and/or a voltage. In case of a frequency event, the plant controller may select or determine a reference of an active power. The plant controller may be configured to determine references for all wind turbines in the wind park. The plant controller may determine for each wind turbine a same reference of the operational parameter or may determine for different wind turbines different references of the operation parameter. Depending on the grid event, the plant controller may determine a first reference of a first operation parameter and optionally even one or more references of one or more operational parameters depending on which operational parameters should be controlled in order to properly respond to the grid event.

The communication between the central plant controller and the wind turbine controller(s) may be by wireless connection, wire-based connection including a communication network depending on the particular application.

The annotation information may represent additional information describing and/or explaining the plant controller determined reference of the operation parameter and/or commanding the wind turbine controller(s). When the wind turbine controller receives the annotation information, the wind turbine controller is in knowledge that the just received plant controller determined reference of the operation parameter relates to or is determined in response to the grid event. The wind turbine controller then can stop any control based on wind turbine controller derived or determined references and switch to control of the respective wind turbine based on the plant controller determined reference of the operation parameter. Using the plant controller determined reference of the operation parameter may allow a more coordinated response than using the locally determined wind turbine controller determined reference of the operation parameter. The plant controller may have information regarding particularities and capabilities of the individual wind turbines and may in particular have the knowledge regarding the relevant electrical properties at the utility grid wind plant connection terminal or PCC. Thus, any information regarding any grid event may be more reliably be present at the plant controller compared to the information which may be present at a wind turbine controller level. This may partly be due because the wind turbine controller may only have access to measurement values regarding electrical properties at the wind turbine output terminal but may not have any information regarding the electrical characteristics for example at the point of common coupling or a wind plant utility grid connection terminal.

By controlling by the wind turbine controller of the wind turbine based on the plant controller determined reference of the operation parameter, an improved response, at least in terms of time, to the utility grid may be provided, in particular if all wind turbines of the wind park are controlled based on respectively received plant controller derived references of the operation parameter. Thereby, the response would be coordinated and the desired park level response would be reached in a reliable and secure manner.

According to an embodiment of the present invention, the annotation information comprising at least one of: an indication to stop controlling the wind turbine based on a wind turbine controller determined event reference of the operation parameter; an indication of the type of the grid event; an indication that the reference of the operation parameter has been determined, in order to respond to the grid event; an indication that a response to the grid event is active; an indication at which time or time span the plant controller determined reference of the operation parameter should be applied for controlling the wind turbine.

Conventionally, any annotation information may have not been communicated between the plant controller and the respective wind turbine controllers. If the annotation information is communicated from the plant controller to the respective wind turbine controllers, the wind turbine controllers may safely stop controlling the respective wind turbines based on their locally determined wind turbine controller determined references of the operational parameter, even if this locally determined reference has been determined in order to respond to the grid event. The plant controller derived reference of the operational parameter is believed to be superior for effectively and reliably responding to the utility grid event compared to any locally derived references of the operational parameter.

The respective wind turbine(s) may further be controlled also based on or depending on the kind of annotation information which is sent from the plant controller to the respective wind turbine controllers. The type of the grid event may for example involve an information regarding a voltage grid event or a frequency grid event for example.

In case there is no utility grid event, the plant controller may, also together with references during normal operation, communicate some annotation information indicating that the utility grid is operating in a normal manner and no grid event is present. In case for example that one or more wind turbines are already in knowledge of a utility grid event (but the plant controller is not yet in knowledge of the grid event or the wind turbine have not yet received any plant controller derived references which respond to the grid event), the wind turbine controllers may have determined their own locally established references of the operational parameter. In case the wind turbines receive from the plant controller the annotation information that the utility grid is operating in a normal manner and no utility grid event is present, the wind turbine controllers may continue to control their respective wind turbines based on the locally determined wind turbine controller derived references of the operational parameter.

Thereby, the (initial) response at the wind turbine level may be provided in a relatively fast manner in order to properly control the wind turbines at least in the initial phase of a grid event even during the time span where no relevant command is yet received from the plant controller. In the initial phase of the response (which is locally determined by the wind turbines or wind turbine controllers), the park response would be uncoordinated, however, could already counteract any deviations of the electrical grid properties from the nominal values.

According to an embodiment the park controller receives event information from the turbine/converter controller to temporarily alter its control behaviour. The event information received from the turbine/converter controller could be information about under or over voltage ride through, or severe frequency events where the turbine/converter temporarily takes control to address the situation. During these events the park controller may freeze references (e.g. P,U,Q, etc) or stop to send references to the wind turbines.

When a park controller is taking over control either when starting up after a reboot or a power outage then the controller state may be initialized to the last known controller state assuming that the controller is started within a limited time from when the last known state was recorded. The time period could as an example be from 0-5min.

Similarly, the controller state may be initialized to the last known state when control responsibility is shifted from one server to another. The shift can be triggered by either a command, or by the server detecting that the other server has becomes unresponsive.

According to an embodiment of the present invention, before receiving, at the wind turbine controller from the plant controller, the reference of the operation parameter and/or the annotation information, the method comprises: controlling the wind turbine based on a wind turbine controller determined reference of the operation parameter.

Before receiving at least the annotation information (that the plant controller derived reference of the operational parameter is based on the grid event), it may be advantageous to control the wind turbine based on a wind turbine controller determined reference of the operational parameter which may already be determined in order to properly respond to the grid event.

A proper response to the grid event may include any measures in order to diminish or decrease any deviation of any electrical property from a nominal electrical property of the utility grid. The controlling of the wind turbine based on the wind turbine controller determined reference of the operational parameter may in particular be provided during an initial response phase in order to respond to a detected grid event. The initial phase may for example endure about between 100 ms and 500 ms or 1000 ms, for example. Other values are possible.

According to an embodiment of the present invention, the method further comprises determining, by the wind turbine controller, the wind turbine controller determined reference of the (e.g. grid event relevant) operation parameter based on the grid event.

The wind turbine controller may for example receive an information regarding any grid event and/or may receive measurement values regarding electrical properties at an output terminal of the wind turbine for example. Since the output terminal of the wind turbine may be connected via a transmission line (and optionally other components like transformers, capacitors, filters) to the utility grid, any utility grid event may also be detectable at an output terminal of the wind turbine. The wind turbine controller may comprise the capability in order to appropriately respond at least in an initial phase to a utility grid event. Thus, a fast response may be enabled.

According to an embodiment of the present invention, the method comprises after receiving, from the plant controller at the wind turbine controller, the plant controller determined reference of the operation parameter and/or the annotation information relating to the reference of an operation parameter: stopping controlling the wind turbine based on the wind turbine controller determined reference of the operation parameter; controlling the wind turbine based on the plant controller determined reference of the operation parameter.

The wind turbine controller may control the wind turbine by the newly received reference of the operational parameter and may discard previously received references of the operational parameter. Thereby, only the references of the utility grid relevant operational parameters may be updated while other operational parameters which are not relevant for responding to the grid event may further or still be applied for control. If the wind turbine is already being controlled by a wind turbine controller determined reference of the operational parameter (which is determined in order to respond to the utility grid event), this kind of control may be stopped and instead the reference or the plant controller determined reference of the operational parameter may then be applied or utilized for a more coordinated and more appropriate response to the grid event.

According to an embodiment of the present invention, the method further comprises detecting the utility grid event; and/or receiving utility grid event related information at the plant controller and/or the wind turbine controller.

The utility grid event related information may be derived based on measurement data or may for example be received from a utility grid operator without requiring to have individual measurement equipment at the site. When the utility grid event is detected or the related information is received, appropriate response measures may be taken, in particular involving determination of references of the grid event relevant operational parameter(s).

According to an embodiment of the present invention, detecting the utility grid event comprises at least one of: detecting a utility grid event at wind turbine level based on at least one electrical measurement, in particular measuring voltage and/or reactive power and/or frequency and/or active power, at a wind turbine power output terminal and/or at a wind turbine utility grid connection terminal; detecting a utility grid event at plant level based on at least one electrical measurement at a plant power output terminal and/or a plant utility grid connection terminal, in particular measuring voltage and/or reactive power and/or frequency and/or active power. Thereby, the utility grid event may be detected at different levels and may be utilized for appropriately controlling the wind turbines.

According to an embodiment of the present invention, the grid event is a utility grid frequency event involving deviation of the grid frequency from a nominal grid frequency, wherein the reference of the operation parameter comprises an active power reference, wherein the active power reference is in particular calculated based on a frequency droop curve. The definition of the frequency droop curve might be defined by turbine parameters or be communicated from the park controller. This enables the park controller to adjust the response to number of turbines available.

The nominal grid frequency may for example amount to 50 Hz or 60 Hz. An imbalance of production of power and consumption of power may result in a change of the grid frequency. When for example a low frequency event is detected, the reference of the active power may be determined in order to inject more power into the utility grid. The frequency droop curve may indicate what amount of additional active power needs to be injected for a given frequency deviation from a nominal grid frequency.

According to an embodiment of the present invention, the grid event comprises a utility grid voltage event and/or a short circuit and/or reconfiguration of at least one component of the utility grid, in particular transformer and/or capacitor, involving deviation of the grid voltage from a nominal grid voltage; wherein the reference of the operation parameter comprises a reactive power reference and/or a voltage reference, wherein the reactive power reference and/or the voltage reference is in particular calculated based on a voltage droop curve. In case for example of a low voltage event, more reactive power may be needed to be injected into the utility grid. Thereby, typical frequency events may be supported by embodiments of the present invention. The voltage droop curve may indicate how much reactive power needs to be injected for a given deviation of the voltage from a nominal grid voltage. The definition of the voltage droop curve might be defined by turbine parameters or be communicated from the park controller. This enables the park controller to adjust the response to number of turbines available.

According to an embodiment of the present invention, control of the wind turbine is dynamically switched between control based on a plant controller determined reference of the operation parameter or a wind turbine controller determined reference of the operation parameter; and/or wherein a response to the grid event is shared between the plant controller and the wind turbine controller; and/or wherein a response to the grid event is initially, in particular for between 5 ms and 500 ms (after start of the grid event), in particular 5 ms and 200 ms, based on the wind turbine controller determined reference of the operation parameter and later, in particular after 200 ms, based on the plant controller determined reference of the operation parameter.

By the above-listed features, the control of the wind turbines during a grid event may be improved. In particular, a fast initial response may be provided by the locally derived wind turbine controller references and a more coordinated and improved response may be provided after the initial phase by the plant controller derived reference of the operational parameter.

According to an embodiment of the present invention, the method further comprises detecting a utility grid event; in case information regarding the grid event is available at a wind turbine and no reference of an (e.g. grid event relevant) operation parameter in response to the grid event is available from the central controller: determining, by the wind turbine controller, a wind turbine controller determined reference of the operation parameter based on the information regarding the grid event; controlling the wind turbine based on the wind turbine controller determined reference of the operation parameter; in case a reference of an (grid event relevant) operation parameter in response to the grid event is available from the central controller: receiving, from the plant controller at the wind turbine controller, the plant controller determined reference of an operation parameter; controlling the wind turbine based on the plant controller determined reference of the operation parameter. Herein, the plant controller may also provide the annotation information relating to the transmitted plant controller determined reference of the operational parameter.

According to an embodiment of the present invention, the method further comprises sending, by the plant controller to the wind turbine controller, handling information regarding handling of one or more grid events (during local control), in particular frequency droop curve and/or voltage droop curve. The plant controller may in particular send reference curves addressing the behaviour in case of different utility grid events. Thereby, the control may be improved regarding coordination.

It should be understood, that features, individually or in any combination, disclosed, described, provided or applied to a method of controlling plural wind turbines may also, individually or in any combination, be applied or provided for a wind plant according to embodiments of the present invention and vice versa.

According to an embodiment of the present invention it is provided a wind plant, comprising: plural wind turbines connectable to a utility grid; a plant controller; and wind turbine controllers communicatively connected with the plant controller; wherein the plant controller is configured: to determine, in response to a utility grid event, a reference of an (grid event relevant) operation parameter; to communicate the plant controller determined reference of the operation parameter to at least one wind turbine controller; to communicating to the wind turbine controller an annotation information indicating that the reference of the operation parameter has been determined based on the grid event; wherein the wind turbine controller is configured: to control the respective wind turbine based on the plant controller determined reference of the operation parameter.

The wind plant may be configured in order to control or carry out a method of controlling plural wind turbines according to an embodiment of the present invention.

According to an embodiment of the present invention, the wind plant further comprises measurement equipment adapted to detect the grid event. The measurement equipment may be partly provided at respective wind turbine output terminals and partly provided at wind plant output terminals which may be connected to the utility grid.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.

The Figure illustrates in a schematic manner a wind park which is configured to control or perform a method for controlling plural wind turbines according to an embodiment of the present invention.

### Detailed Description

The illustration in the drawings is in schematic form. It is noted that in different figures, elements similar or identical in structure and/or function are provided with the same reference signs or with reference signs, which differ only within the first digit. A description of an element not described in one embodiment may be taken from a description of this element with respect to another embodiment.

The wind plant 1 schematically illustrated in the Figure comprises plural wind turbines 2a, 2b, ... which are connectable (or connected) to a utility grid 3. Each of the wind turbines 2a, 2b, ... comprises a wind turbine controller 5a, 5b, ... which are each communicatively connected with a plant controller 4.

The plant controller 4 is configured to determine, in response to a utility grid event, a reference 6a, 6b, ... of a grid event relevant operational parameter, in particular a operational parameter which is relevant to respond to the actual grid event. The plant controller 4 is further configured to communicate the plant controller determined references 6a, 6b of the operational parameter to at least one wind turbine controller 5a, 5b, ... The plant controller 4 is further configured to communicate to the wind turbine controller 5a, 5b, ... an annotation information 7a, 7b, ... indicating that the reference of the operational parameter 6a, 6b, ... has been determined based on the grid event.

The wind turbine controller (s) 5a, 5b, ... are configured to control the respective wind turbine based on the plant controller determined reference 6a, 6b, ... in particular by supplying the control signals 8a, 8b which are based on the operational parameter references 6a, 6b as received from the plant controller 4. It should be understood that the control signals 8a, 8b may in particular indicate references of a relevant operational parameter, for example an active power reference (for example in case of a frequency grid event) and/or a reactive power reference or voltage reference in case of a voltage grid event for example.

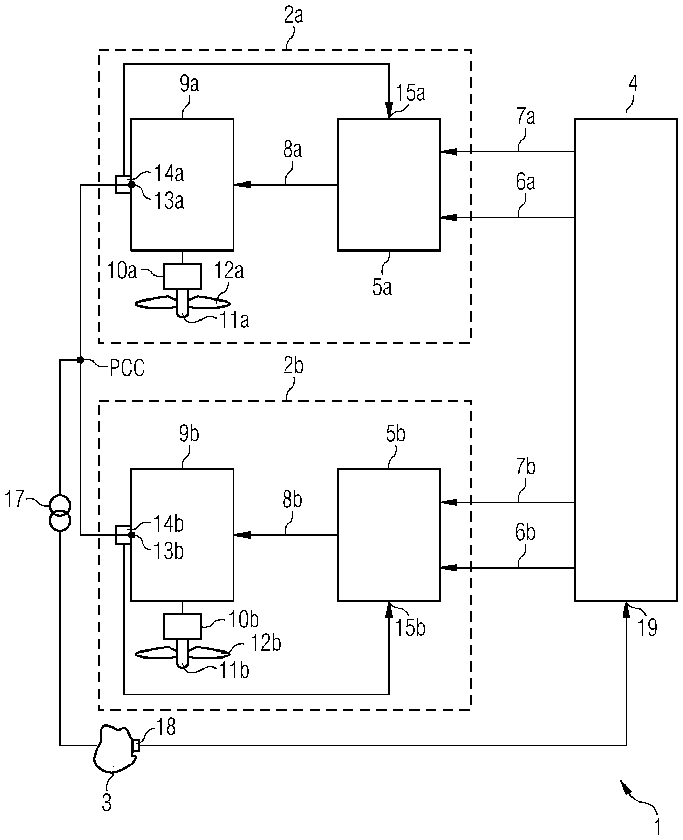

In the embodiment illustrated in Fig. 1, the control signals 8a, 8b are supplied from the respective wind turbine controllers 5a, 5b, ... to a respective converter 9a, 9b, ... comprised in every wind turbine 2a, 2b, ... The converter is electrically connected to a respective generator 10a, 10b, ... having a rotor which is mechanically coupled to a hub 11a, 11b, ... at which plural rotor blades 12a, 12b, ... are connected.

In the illustrated embodiment, the converters 9a, 9b, ... comprise or have output terminals 13a, 13b at which electrical measurement sensors 14a, 14b are provided. The measurement equipment 14a, 14b, ... measures the electrical characteristics at the output terminals 13a, 13b of the respective wind turbines 2a, 2b, ... and supplies respective measurement signals 15a, 15b to the respective wind turbine controllers 5a, 5b. Thereby, it is enabled that the wind turbines 2a, 2b, ... locally detect any grid event since their output terminals 13a, 13b, ... are also connected to the utility grid 3, for example via a point of common coupling PCC and via for example a wind park transformer 17.

An electrical measurement equipment 18 is also provided to measure the electrical properties of the utility grid 3. Respective measurement values 19 are supplied to the power plant controller 4 which is therefore also enabled to detect a grid event. A grid event is for example detected if for example an actual grid voltage and/or an actual grid frequency deviates from a respective nominal grid voltage and/or nominal grid frequency.

Thus, the references of the operational parameter 6a, 6b, ... as derived by the plant controller 4 are determined in response to a utility grid event, in order to provide a countermeasure counteracting the utility grid event.

The annotation information 7a, 7b relating to the references 6a, 6b of the operational parameter may for example indicate that a response to the grid event is active. The annotation information 7a, 7b additionally or alternatively may indicate that the wind turbines should stop controlling the respective wind turbines based on locally determined references of an operational parameter.

In case the wind turbine controllers 5a, 5b, ... do not receive the annotation information 7a, 7b indicating that the frequency response or in general any grid event response is active, they may locally determine wind turbine controller determined references of any operational parameter, for example based on the grid event as detected using the measurement equipment 14a, 14b, ... In this case, the control signals 8a, 8b, ... may be based on references locally derived by the wind turbine controllers 5a,5b,..

When the grid event is over, the plant controller 4 may update control signals, in particular the references of the operational parameter 6a, 6b as well as the annotation information 7a, 7b. The plant controller 4 may then for example provide limit values of one or more operational parameters to the wind turbine controller(s). The annotation information may be omitted in this case or may be supplemented, however, indicating that the utility grid is in normal operation and no grid event is present.

In this case, the wind turbine controller may take over control of their respective converters by determining within the limits provided by the plant controller their locally derived references for one or more operational parameter, like voltage and/or active power and/or reactive power. A further example of transitioning out of a grid event is that the wind turbine controller keeps using the last received event reference for a period of time as an example in the range from 0s to 5s, and then either step to the park controller reference, or ramp linearly or exponentially to the reference received from the park controller over 0s to 5s.

By embodiments of the present invention, disadvantages as observed in the prior art in that for example the dynamic response would be slow and the park level steady state response would not reach the desired target may be diminished or even avoided.

By combining the response on both the individual turbine and the power plant controller, embodiments of the present invention provide an initial fast reaction on the wind turbine level. However, also the slower coordinate reaction or response to the grid event may be provided by the power plant controller which may aim to converge the response from the individual turbines towards the desired site response.

If, for example, a frequency event is detected by the wind turbines, they may react to it autonomously and calculate their individual active power reference based on a for example frequency droop curve.

When (for example at a later point in time), the power plant controller detects a frequency event, it may calculate active power references to the wind turbines based on its internal droop curve and communicate to the wind turbines that the reference is based on a frequency event. In this case (when the references from the plant controller and the annotation information is received at the wind turbine controllers), the wind turbines may converge the applied active power reference towards following the power reference from the power plant controller.

The additional information (for example annotation information 7a, 7b, ... illustrated in the Figure) that the power plant controller reference (for example the references 6a, 6b, ... of the operational parameter) is based on a frequency event (or in general any grid event) may allow the wind turbines to stop the local frequency control (or for example voltage control) and rely on the plant level control instead.

Several advantages may be provided:
1. A fast reaction to changes in frequency or voltage deviation in the grid may be performed at the wind turbine level.
2. Robustness to communication errors as the wind turbines will do frequency and/or voltage response even when no communication to the power plant controller is established.

The power plant controller could additionally distribute the configuration of the frequency droop curve to the turbines to at least coordinate the direction of the initial fast response.

Embodiments of the present invention support not only frequency events but could be used for any grid events where both a fast reaction and a coordinated response is desired.

Embodiments may provide a response to a grid event is distributed on both the wind turbine level and the park level.

The initial reaction to the event (for example as provided by the wind turbine controllers) may be faster as there is no reliance on communication between several components in the system.

The trends in nowadays grid requirements seems to be that the system should react faster and faster. The worst-case reaction time is the sum of the components worst-case reaction times, so it is beneficial to get the first reaction at the turbine level and then let as lower controller take over the response.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of controlling plural wind turbines (2a,2b) being connected to a utility grid (3), comprising respective wind turbine controllers (5a,5b) and being communicatively connected with a plant controller (4), the method comprising for at least one wind turbine:
determining, by the plant controller (4), in response to a utility grid event, a reference (6a, 6b) of an operation parameter (P, Q, U);
communicating, from the plant controller (4) to the wind turbine controller (5a, 5b), or converter controller, the plant controller determined reference (6a,6b) of the operation parameter; wherein
- before receiving, at the wind turbine controller (5a,5b) from the plant controller (4), the reference (6a,6b) of the operation parameter and/or an annotation information (7a,7b), the method comprises: controlling the wind turbine (2a,2b) based on a wind turbine controller determined reference of the operation parameter, and/or
- after receiving, from the plant controller at the wind turbine controller, the plant controller determined reference (6a,6b) of the operation parameter and/or an annotation information (7a,7b) relating to the reference of an operation parameter, the method comprises:
stopping controlling the wind turbine based on the wind turbine controller determined reference of the operation parameter;
controlling the wind turbine (2a,2b) based on the plant controller determined reference (6a,6b) of the operation parameter.

2. Method according to claim 1, comprising communicating, from the plant controller (4) to the wind turbine controller (5a,5b), an annotation information (7a,7b) indicating that the reference of the operation parameter has been determined based on the grid event; then
controlling, by the wind turbine controller (5a,5b), the wind turbine (2a,2b) based on the plant controller determined reference (6a,6b) of the operation parameter.

3. Method according to the preceding claim 1 or 2, wherein the annotation information (7a,7b) comprising at least one of:
an indication to stop controlling the wind turbine (2a,2b) based on a wind turbine controller determined reference of the operation parameter;
an indication of the type of the grid event;
an indication that the reference (6a,6b) of the operation parameter has been determined, in order to respond to the grid event;
an indication that a response to the grid event is active;
an indication at which time or time span the plant controller determined reference (6a,6b) of the operation parameter should be applied for controlling the wind turbine.

4. Method according to the preceding claim, further comprising:
determining, by the wind turbine controller (5a,5b), the wind turbine controller determined reference of the operation parameter based on the grid event.

5. Method according to any one of the preceding claims, further comprising:
detecting the utility grid event; and/or
receiving utility grid event related information at the plant controller and/or the wind turbine controller.

6. Method according to any of the preceding claims, wherein detecting the utility grid event comprises at least one of:
detecting a utility grid event at wind turbine level based on at least one electrical measurement (15a,15b), in particular measuring voltage and/or reactive power and/or frequency and/or active power, at a wind turbine power output terminal and/or at a wind turbine utility grid connection terminal;
detecting a utility grid event at plant level based on at least one electrical measurement (19) at a plant power output terminal and/or a plant utility grid connection terminal, in particular measuring voltage and/or reactive power and/or frequency and/or active power.

7. Method according to any one of the preceding claims,
wherein the grid event is a utility grid frequency event involving deviation of the grid frequency from a nominal grid frequency,
wherein the reference (6a,6b) of the operation parameter comprises an active power reference,
wherein the active power reference is in particular calculated based on a frequency droop curve.

8. Method according to any one of the preceding claims,
wherein the grid event comprises a utility grid voltage event and/or a short circuit and/or reconfiguration of at least one component of the utility grid, in particular transformer and/or capacitor, involving deviation of the grid voltage from a nominal grid voltage;
wherein the reference (6a,6b) of the operation parameter comprises a reactive power reference and/or a voltage reference,
wherein the reactive power reference and/or the voltage reference is in particular calculated based on a voltage droop curve.

9. Method according to any one of the preceding claims,
wherein control of the wind turbine is dynamically switched between control based on a plant controller determined reference of the operation parameter or a wind turbine controller determined reference of the operation parameter; and/or
wherein a response to the grid event is shared between the plant controller and the wind turbine controller; and/or
wherein a response to the grid event is initially, in particular for between 5 ms and 500 ms (after start of the grid event), in particular 5 ms and 200 ms, based on the wind turbine controller determined reference of the operation parameter and later, in particular after 200 ms, based on the plant controller determined reference of the operation parameter.

10. Method according to any one of the preceding claims, comprising:
detecting a utility grid event;
in case information regarding the grid event is available at a wind turbine and no reference of an operation parameter in response to the grid event is available from the central controller:
determining, by the wind turbine controller, a wind turbine controller determined reference (8a,8b) of the operation parameter based on the information regarding the grid event;
controlling the wind turbine based on the wind turbine controller determined reference (8a,8b) of the operation parameter;
in case a reference of an operation parameter in response to the grid event is available from the central controller (4):
receiving, from the plant controller (4) at the wind turbine controller (5a,5b), the plant controller determined reference (6a, 6b) of an operation parameter;
controlling the wind turbine based on the plant controller determined reference (6a,6b) of the operation parameter.

11. Method according to any one of the preceding claims, further comprising:
sending, by the plant controller (4) to the wind turbine controller (5a,5b), handling information regarding handling of one or more grid events, in particular frequency droop curve and/or voltage droop curve.

12. Wind plant (1), comprising:
plural wind turbines (2a,2b) connectable or connected to a utility grid (3);
a plant controller (4); and
wind turbine controllers (5a,5b) communicatively connected with the plant controller (4);
wherein the plant controller is configured:
to determine, in response to a utility grid event, a reference (6a,6b) of an operation parameter;
to communicate the plant controller determined reference (6a,6b) of the operation parameter to at least one wind turbine controller (5a,5b);
wherein
- before receiving, at the wind turbine controller (5a,5b) from the plant controller (4), the reference (6a,6b) of the operation parameter and/or the annotation information (7a,7b), the wind turbine controller is configured: to control the wind turbine (2a,2b) based on a wind turbine controller determined reference of the operation parameter, and/or
- after receiving, from the plant controller at the wind turbine controller, the plant controller determined reference (6a,6b) of the operation parameter and/or an annotation information (7a,7b) relating to the reference of an operation parameter, the wind turbine controller is configured:
to stop controlling the wind turbine based on the wind turbine controller determined reference of the operation parameter;
to start controlling the wind turbine (2a,2b) based on the plant controller determined reference (6a,6b) of the operation parameter.

13. Wind plant according to the preceding claim 12, further comprising:
measurement equipment (14a,14b,18) adapted to detect the grid event.

14. Wind plant according to claim 12 or 13, wherein the plant controller in addition is configured to operate according to any of claims 2-11.
